# EUROPÄISCHE PATENTSCHRIFT

(11) **EP 1 625 319 B1**
(45) Veröffentlichungstag und Bekanntmachung des Hinweises auf die Patenterteilung: **12.03.2008**
(21) Anmeldenummer: 04721114.9
(22) Anmeldetag: 17.03.2004
(51) Int. Cl.: F16K 31/06

(54) **REGLER FÜR ELEKTROPNEUMATISCHE DRUCKWANDLER**
REGULATOR FOR ELECTROPNEUMATIC PRESSURE TRANSDUCER
REGULATEUR POUR TRANSDUCTEURS DE PRESSION ELECTROPNEUMATIQUES

(30) Priorität: 14.05.2003 DE 10321731
(43) Veröffentlichungstag der Anmeldung: 15.02.2006
(73) Patentinhaber: ROBERT BOSCH GMBH, 70442 Stuttgart (DE)
(72) Erfinder: LAUE, Harald, 73733 Esslingen (DE); KRIMMER, Erwin, 73655 Pluederhausen (DE)
(74) Vertreter: Hörschler, Wolfram Johannes
(86) Internationale Anmeldenummer: PCT/DE2004/000532
(87) Internationale Veröffentlichungsnummer: WO 2004/104461

(56) Entgegenhaltungen:
- DE-A- 19 500 567
- DE-A- 19 545 532
- DE-A- 19 623 960
- DE-C- 4 110 003
- US-A- 5 979 863

## Beschreibung

### Technisches Gebiet

Elektropneumatische Druckwandler werden in Kraftfahrzeugen eingesetzt und erlauben die Bereitstellung eines zwischen einem Umgebungsdruck und einem vorgebbaren Unterdruck liegenden Verbraucherdruckes (Verbraucherunterdruck). Die Höhe des Verbraucherdruckes wird in der Regel über einen Steuerstrom eingestellt, mit dem ein Spulenkörper eines Magnetventiles des elektropneumatischen Druckwandlers beaufschlagt wird. Mittels elektropneumatischen Druckwandler können Klappensteller im Ansaugtraktbereich oder im Abgastrakt einer Verbrennungskraftmaschine angesteuert werden.

### Stand der Technik

DE 195 00 567.8 offenbart einen elektropneumatischen Druckwandler. Eine dem Steuerstrom, mit welchem ein Spulenkörper eines Magnetventils beaufschlagt wird, proportionale Magnetkraft, hält einen Anker gegen einen Dichtsitz, der einen mit dem Umgebungsdruck verbundenen Anschluss von einem Anschluss abdichtet, an dem der Verbraucherdruck anliegt. Bei stromlosem Zustand des Magnetventiles ist der Dichtsitz geschlossen. Dabei ist von Nachteil, dass systemimmanente Undichtigkeiten zwischen einem mit dem Unterdruck beaufschlagbaren Anschluss und dem den Verbraucherdruck aufweisenden Anschluss auftreten können. An diesem liegt im stromlosen Zustand des Magnetventiles ein relativ großer Verbraucherunterdruck an.

DE 196 23 960 A1 bezieht sich ebenfalls auf einen elektropneumatischen Druckwandler. Der offenbarte elektropneumatische Druckwandler umfasst ein Magnetventil, das eine Magnetspule sowie einen, gegen einen Dichtsitz bildenden Anschlag verschiebbar geführten Anker aufweist. Der Anker ist mittels eines biegeelastischen Halterelementes gehalten. Im stromlosen Zustand der Magnetspule des Magnetventiles ist der Anker in einem Abstand zu dem Anschlag gehalten, derart, dass sich ein Ringspalt zwischen einem mit Umgebungsdruck beaufschlagbaren Bereich und einem mit Unterdruck beaufschlagbaren Bereich des elektropneumatischen Druckwandlers ergibt. Der Ringspalt kann mittels des biegeelastisch ausgebildeten Halteelementes eingestellt werden. Eine den Anker in der Horizontalen haltende Federkraft des Halteelementes ist größer bemessen als eine senkrecht auf den Anker wirkende Federkraft eines den Anker in Richtung des Anschlages drückenden Federelementes.

DE 195 45 532 A1 bezieht sich auf eine Halte- und Führungseinheit für ein Sperrorgan eines Solenoidventils und ein Verfahren zu ihrer Herstellung. Es wird eine Halte- und Führungseinheit offenbart, die dreiteilig ausgebildet ist und ein Ringelement, ein topfförmiges Element und ein Sperrorgan umfasst. Dabei ist das Sperrorgan zwischen dem Ringelement und dem Boden des topfförmigen Elementes in einem Ringsitz eingeklemmt.

Gemäß der aus dem Stande der Technik bekannten Lösungen, werden ein Membranteil und ein Ventilhutteil eines Reglers des elektropneumatischen Druckwandlers als getrennte Bauteile ausgebildet. Diese werden mittels Druckfedern, die sich an Gehäuse und Deckelelement des elektropneumatischen Druckwandlers abstützen und eine Verpressung zwischen dem Gehäuse und dem Deckelelement fixiert. Die Auslegung der Druckfedern und die Federeigenschaften des Membranteiles bestimmen den Arbeitshub des Membrandeckels sowie des Ventilhutes im Regelbetrieb des elektropneumatischen Druckwandlers. Sowohl der Ventilhut als auch das Membranteil werden im Zweikomponentenspritzgießverfahren hergestellt. Hierbei liegen die Werkzeugkosten sehr hoch. Ein weiterer Nachteil der aus dem Stand der Technik bekannten Lösungen, stellt die Montage des Regelteiles im Gehäuse des elektropneumatischen Druckwandlers sowie den dazugehörigen Federelementen dar, die sehr aufwändig ist.

### Darstellung der Erfindung

Mit der erfindungsgemäßen Lösung kann das Reglerteil eines elektropneumatischen Druckwandlers erheblich vereinfacht werden. Die Funktionen des aus dem Stande der Technik bekannten Ventilhutes und der zweiteiligen Membran kann von einer Regler-Baugruppe übernommen werden, die einfach herstellbare Spritzgussbauteile umfasst und lediglich ein Druckfederelement benötigt.

Damit lassen sich durch Einsatz wenigerer Bauteile einerseits eine einfache Montage der erfindungsgemäß vorgeschlagenen Regler-Baugruppe eines elektropneumatischen Druckwandlers unter andererseits gleicher Funktionalität des elektropneumatischen Druckwandlers realisieren. Die Regler-Baugruppe umfasst drei Bauteile, nämlich ein Oberteil, ein einstückig ausgebildetes Membranteil sowie ein Unterteil, wobei das Unterteil mit Stegflächen ausgebildet ist. Diese Bauteile der Regler-Baugruppe eines elektropneumatischen Druckwandlers lassen sich getrennt im Wege des Kunststoffspritzgießverfahrens herstellen. Die genannten Bauteile der Regler-Baugruppe werden nach dem Herstellen im Wege des Kunststoffspritzgießverfahrens gefügt. Nach dem Fügevorgang können das Ober- und das Unterteil der Regler-Baugruppe mittels eines stoffschlüssigen Fügeverfahrens wie beispielsweise dem Ultraschallschweißen miteinander verschweißt werden. Bei dem Verschweißen des Ober- und des Unterteiles der Regler-Baugruppe mit dem einstückig ausgebildeten Membranteil werden an der zwischengelagerten Membran mehrere Dichtstellen erzeugt, welche die Funktionalität der Regler-Braugruppe des erfindungsgemäß vorgeschlagenen elektropneumatischen Druckreglers realisieren. Die Regler-Baugruppe umfasst ein Oberteil mit einer eine Durchgangsöffnung begrenzenden Umrandung, die mit einer Planfläche des einstückig ausgebildeten Membramteils eine Dichtfläche ausbildet. Das einstückig ausgebildete Membranteil, umfasst ebenfalls eine Öffnung berandenden ringförmig ausgebildeten Steg, in welchem das Oberteil aufgenommen werden kann. Das Unterteil, welches in der erfindungsgemäß vorgeschlagenen Regler-Baugruppe zum Einsatz kommt, umfasst mehrere durch Zwischenräume voneinander getrennte stegförmige Flächen.

Neben dem stoffschlüssigen Fügeverfahren, wie dem Ultraschall-Schweißverfahren, kann eine stoffschlüssige Verbindung zwischen dem Oberteil und dem Unterteil der erfindungsgemäß vorgeschlagenen Regler-Baugruppe für einen elektropneumatischen Druckwandler, auch im Wege des Laserschweißens oder anderer stoffschlüssiger Verfahren hergestellt werden.

### Zeichnung

Anhand der Zeichnung wird die Erfindung nachstehend eingehender erläutert.

Es zeigt:
- Figur 1: den Einsatz elektropneumatischer Druckwandler zur Ansteuerung von Klappensteller im Ansaug- bzw. Abgastrakt von Verbrennungskraftmaschinen,
- Figur 2: den schematischen Aufbau eines aus dem Stande der Technik bekannten elektropneumatischen Druckwandlers,
- Figur 2.1: eine Detailansicht der Regler-Baugruppe eines aus dem Stande der Technik bekannten elektropneumatischen Druckwandlers gemäß der Darstellung in Fig. 2,
- Figuren 3.1, 3,2, 3,3: die Einzelteile einer erfindungsgemäß vorgeschlagenen Regler-Baugruppe eines elektropneumatischen Druckwandlers,
- Figur 4: einen Querschnitt durch eine mittels eines stoffschlüssigen Fügeverfahrens gefügte Regler-Baugruppe, ein Oberteil, ein einstückiges Membranteil sowie ein Unterteil umfassend und
- Figur 5: den Einsatz der erfindungsgemäß vorgeschlagenen Regler-Baugruppe gemäß Fig. 4 an einem elektropneumatischen Druckwandler.

### Ausführungsvarianten

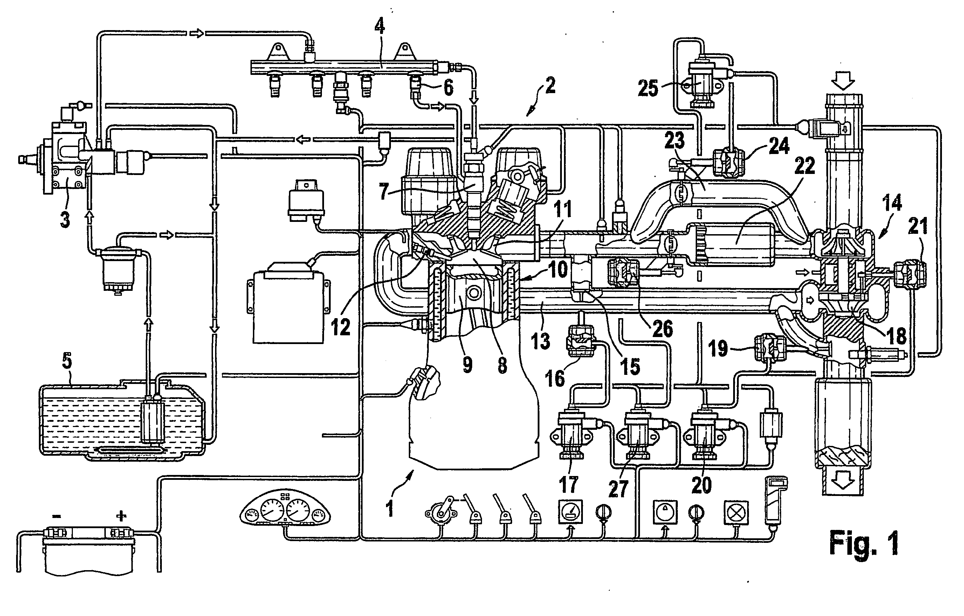

Der Darstellung gemäß Fig. 1 ist die Anordnung von elektropneumatischen Druckwandlern im Ansaug- bzw. Abgastrakt einer Verbrennungskraftmaschine zu entnehmen. In der Darstellung gemäß Fig. 1 ist eine Verbrennungskraftmaschine 1 dargestellt, die über einen Hochdruckspeicherraum 4 (Common-Rail) mit Kraftstoff versorgt wird. Der Zylinderkopfbereich der Verbrennungskraftmaschine 1 ist durch Bezugszeichen 2 gekennzeichnet; der Hochdrucksammelraum 4 zur Aufnahme von Kraftstoff wird über ein Hochdruckförderaggregat 3 mit aus einem Kraftstofftank 5 geförderten Kraftstoff beaufschlagt. Das Hochdruckförderaggregat 3 beaufschlagt den Hochdrucksammelraum 4 mit unter extrem hohem Druck stehenden Kraftstoff.

Vom Druckspeicher 4 (Common-Rail) strömt der Kraftstoff über Hochdruckanschlüsse 6 einzelnen, entsprechend der Anzahl der mit Kraftstoff zu versorgenden Brennräume 8 der Verbrennungskraftmaschine 1 vorgesehenen Kraftstoffinjektoren 7 zu. Der Kraftstoffinjektor 7 ist im Zylinderkopfbereich 2 der Verbrennungskraftmaschine 1 derart angeordnet, dass die Einspritzöffnungen in den Brennraum 8 zwischen Einlassventilen 11 und Auslassventilen 12 liegen. An das Auslassventil 12 schließt sich eine Abgasleitung 13 an, während am Einlassventil oder den Einlassventilen 11 eine Ansaugluftleitung angeschlossen ist. In der Abgasleitung 13 der Verbrennungskraftmaschine 1 kann eine Ladeeinrichtung 14 angeordnet werden, die als Turbolader ausgebildet sein kann. In der Abgasleitung 13 ist ein Abgasrückführventil 15 vorgesehen, welches mittels eines ersten Stellers 16 betätigbar ist. Der erste Steller 16 wiederum ist über einen ersten elektropneumatischen Wandler 17 betätigbar. Über die Abgasleitung 13 strömt einem Laufrad 18 der Ladeeinrichtung 14 Abgas zu. In der Abgasleitung 13 ist weiterhin ein erster Ladedrucksteller 19 aufgenommen, mit der die Ladeeinrichtung 14 beaufschlagt wird beeinflussbar ist. Der erste Ladedrucksteller 19 seinerseits ist über einen zweiten elektropneumatischen Wandler 20 betätigbar. Der Ladeeinrichtung 14 ist darüber hinaus ein weiterer, zweiter Ladedrucksteller 21 zugeordnet, welcher ebenfalls über den zweiten elektropneumatischen Wandler 20 betätigbar ist. Das Laufrad 18 der Ladeeinrichtung 14 treibt ein Verdichterrad an, mit welchem Frischluft verdichtet wird und einem Ladeluftkühler 22 zugeführt wird. Parallel zum Ladeluftkühler 22 erstreckt sich in der Ansaugleitung der Verbrennungskraftmaschine ein Bypass 23, in welchem ein Bypass-Klappensteller 24 aufgenommen ist, der seinerseits durch einen dritten elektropneumatischen Wandler 25 betätigbar ist. Zwischen der Ausgangsseite des Ladeluftkühlers 22 und der Mündungsstelle des Bypasses 23 in die Ansaugleitung ist ein Regelklappensteller 26 integriert, welcher seinerseits über einen vierten elektropneumatischen Wandler 27 angesteuert wird.

Die in Fig. 1 dargestellten elektropneumatischen Wandler 17, 20, 25 und 27 werden häufig, wie aus der Darstellung gemäß Fig. 1 hervorgeht im Ansaugtrakt- bzw. Abgastrakt einer Verbrennungskraftmaschine 1 eingesetzt. Elektropneumatische Wandler 17, 20, 25 und 27 können auch zur Betätigung von Swirl-Klappen und zur Kanalabschaltung im Saurohr eingesetzt werden, wenn pneumatische und proportionale Stellvorgänge erforderlich werden.

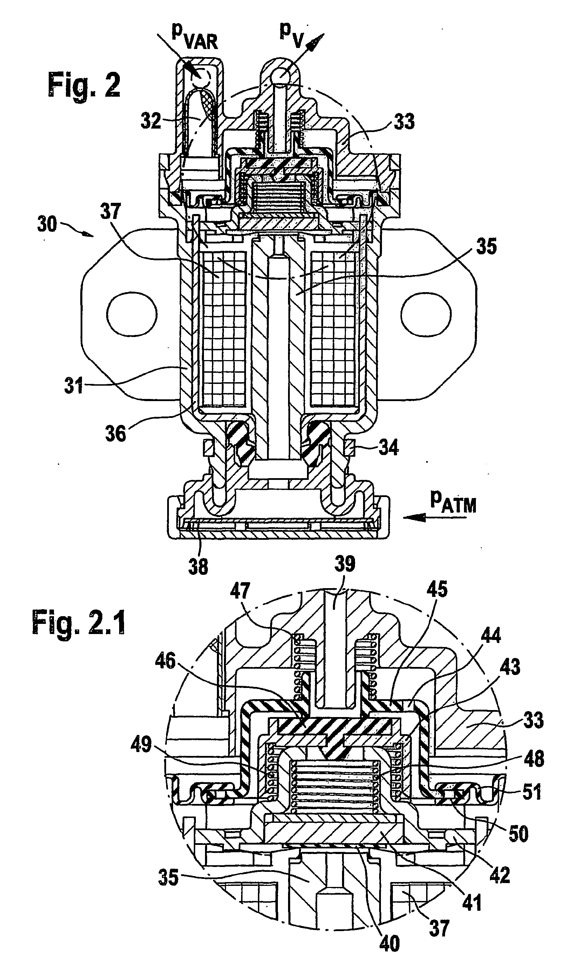

Fig. 2 ist der schematische Aufbau eines aus dem Stande der Technik bekannten elektropneumatischen Wandlers zu entnehmen.

Aus der Darstellung gemäß Fig. 2 geht hervor, dass der dort dargestellte elektropneumatische Wandler 30 ein Gehäuse 31 umfasst. In das Gehäuse 31 ist im Bereich einer Öffnung zum Zuführen des Atmosphärendruckes p_{ATM} ein scheibenförmiges Filterelement 38 eingelassen. Das Gehäuse 31 ist durch ein Deckelteil 33 verschlossen. Im Gehäuse 31 ist ein Magnettopf 36 aufgenommen, in welchen eine Magnetspule 37 eingelassen ist. Der Magnettopf 36 ist gegen das Gehäuse 31 an dessen Unterseite über eine Dichtung 34 abgedichtet. Die Magnetspule 37 umschließt einen Magnetkern 35, welcher eine Durchgangsbohrung aufweist. Im Deckelteil 33 des elektropneumatischen Wandlers 30 gemäß Fig. 2 ist ein Filterelement 32 in einen Stutzenanschluss eingelassen, an dem ein variabler Verbraucherunterdruck p_{VAR} anliegt. Im Deckelteil 33 des elektropneumatischen Wandlers 30 gemäß Fig. 2 befindet sich ferner ein Anschlussstutzen für eine Unterdruckquelle, die einen Versorgungsunterdruck p_{V} bereitstellt.

Der Darstellung gemäß Fig. 2.1 ist die Regler-Baugruppe des elektropneumatischen Wandlers gemäß Fig. 2 in vergrößertem Maßstab zu entnehmen.

Aus der Darstellung gemäß Fig. 2.1 geht hervor, dass im Deckelteil 33 eine Bohrung 39 ausgebildet ist. An der Bohrung liegt der Versorgungsunterdruck p_{V} an. Das Deckelteil 33 umschließt ein erstes Membranteil 45,welches an einer Koppelstelle 50 mit einem weiteren, zweiten Membranteil 51 verbunden ist. In das erste Membranteil 45 ist eine Drosselöffnung 44 eingelassen. Zwischen der Innenseite des Deckelteiles 33 und dem Halsbereich des ersten Membranteiles 45 befindet sich ein erstes Federelement 47. Das Membranteil 45 umschließt seinerseits einen Ventilhut 43, der sich an einem Joch 42 über ein drittes Federelement 49 abstützt. Das Joch 42 ist wiederum durch ein zweites Federelement 48 oberhalb einer Ankerplatte 41 abgestützt. Der Ventilhut 43 weist einen Dichtgummi 46 auf, auf welchem sich der Halsbereich des ersten Membranteiles 45 abstützt. An einer Koppelstelle 50 sind das erste Membranteil 45 und ein weiteres, zweites Membranteil 51 miteinander verbunden. Unterhalb der Ankerplatte 41 ist eine Gummiplatte 40 aufgenommen, welche einer Stirnseite des Magnetkernes 35 gegenüberliegt. Der Magnetkern 35 seinerseits ist von einer in der Detailansicht gemäß Fig. 2.1 nur teilweise dargestellten Magnetspule 37 umgeben.

Aus der Darstellung gemäß Fig. 2.1 geht hervor, dass die dort dargestellte Regler-Baugruppe im oberen Bereich des elektropneumatischen Wandlers 30 allein drei Federelemente 47, 48, 49 erfordert, was hinsichtlich der Montage sehr aufwändig ist, ferner sind eine Vielzahl von Bauteilen 45, 51 hinsichtlich der Membran, der Ventilhut 43, der Dichtgummi 46, die erwähnten Federn 47, 48, 49 erforderlich, was hinsichtlich der Montage einen weiteren nur schwierig zu automatisierenden Prozess erfordert.

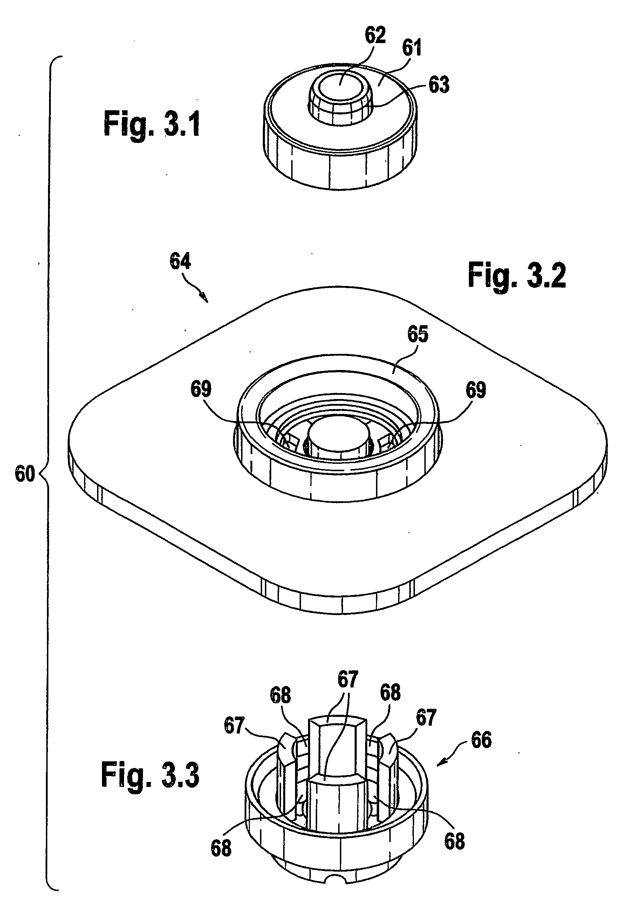

Den Darstellungen gemäß der Fig. 3.1, 3.2, 3.3 sind Einzelteile der erfindungsgemäß vorgeschlagenen Regler-Baugruppe für einen elektropneumatischen Wandler entnehmbar. Eine Reglerbaugruppe 60 umfasst ein Oberteil 61, welches eine Durchgangsöffnung 62 aufweist. Die Durchgangsöffnung 62 ist von einer Berandung 63 umschlossen. Fig. 3.2 zeigt ein einstückig ausgebildetes, mit einem Flächenbereich versehenes Membranteil 64, welches an seiner Oberseite ebenfalls eine Berandung 65 einer Öffnung aufweist. Fig. 3.3 ist ein Unterteil 66 der erfindungsgemäß vorgeschlagenen Regler-Baugruppe 60 für einen elektropneumatischen Druckwandler zu entnehmen, welches mehrere voneinander durch Zwischenräume 68 getrennte Stegflächen 67 aufweist.

Die in den Fig. 3.1, 3.2 sowie 3.3 dargestellten Einzelteile der erfindungsgemäß vorgeschlagenen Regler-Baugruppe 60 lassen sich als einfach herstellbare Spritzgussteile fertigen, wodurch sich eine einfach aufgebaute Regler-Baugruppe 60 ergibt, die wenige Bauteile erfordert, eine einfache Montage gewährleistet und eine identische Funktionalität im Vergleich zu der in den Fig. 2 und 2.1 dargestellten, aus einer Vielzahl von Einzelteilen bestehenden Regler-Baugruppe gewährleistet.

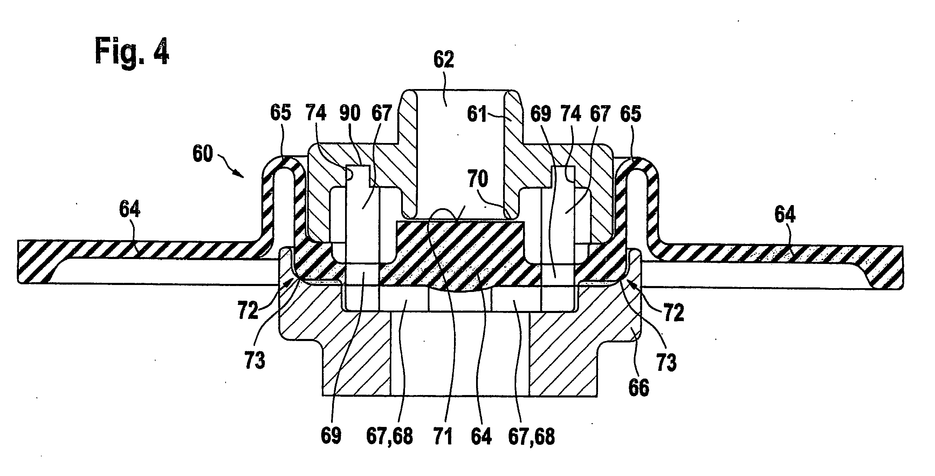

Fig. 4 ist ein Querschnitt durch eine stoffschlüssig gefügte Regler-Baugruppe, ein Oberteil, ein einstückiges flächiges Membranteil sowie ein Unterteil umfassend, entnehmbar.

Aus der Darstellung gemäß Fig. 4 geht hervor, dass das Oberteil 61 in die Berandung 65 des flächigen Membranteiles 64 eingesetzt wird. Der untere Rand des Oberteiles 61 liegt auf dem Grund der Berandung 65 des einstückigen Membranteiles 64 an. Das Oberteil 61 liegt auf den Stegflächen 67, die ihrerseits durch Zwischenräume 68 getrennt sind, auf. Die Stegflächen 67 durchsetzen in Fig. 4 nicht dargestellte Öffnungen 69 im Boden des Membranteiles 64, welche innerhalb der Berandung 65 liegen.

Das flächig ausgebildete, einstückige Membranteil 64 liegt seinerseits im Unterteil 66 der Regler-Baugruppe an. Zwischen einem Dichtring 70 und dem Membranteil 64 stellt sich unter Ausbildung eines Linienkontaktes 73 ein Dichtbereich 72 ein. Die Stegflächen 67 durchsetzen Öffnungen 69 im Boden des Membranteiles 64 und sind an stoffschlüssigen Fügestellen 74, beispielsweise im Wege des Ultraschallschweißverfahrens mit der Unterseite des Oberteiles 61 stoffschlüssig verbindbar.

Das einstückig, flächige ausgebildete Membranteil 64 weist darüber hinaus unterhalb der Öffnung 62 eine mit Bezugszeichen 71 bezeichnete Planfläche auf. Eine untere Berandung der Öffnung 62 bildet mit der Planfläche 71 des einstückig, flächig ausgebildeten Membranteiles 64 einen Dichtfläche 70 im Betrieb der Regler-Baugruppe 60, deren Einzelteile in den Fig. 3.1, 3.2 und 3.3 dargestellt sind.

Die entsprechend der Darstellung in Fig. 3.3 gekrümmt ausgebildeten Stegflächen 67 greifen mit ihren oberen Enden in eine umlaufende Nut des Oberteiles 61 ein. Die Stegfläche 67 ragen durch die Öffnungen 69 im Boden des Membranteils 64 hindurch. Dadurch wird das Fügen der Regler-Baugruppe 60, das Oberteil 61, die einstückige Membran 64 sowie das Unterteil 66 umfassend, erheblich vereinfacht. Neben dem stoffschlüssigen Fügen des Oberteiles 61 mit dem Unterteil 66 unter Zwischenschaltung des flächig, einstückig ausgebildeten Membranteiles 64 im Wege des Ultraschall-Schweißverfahrens können auch andere stoffschlüssige Fügeverfahren, wie zum Beispiel Reibschweißen, Laserstrahlschweißen und dergleichen eingesetzt werden. Nach dem Fügen der Komponenten 61, 64 und 66 der erfindungsgemäß vorgeschlagenen Regler-Baugruppe 60 können nach dem Fügevorgang automatisiert stoffschlüssig miteinander verbunden werden, wobei die stoffschlüssigen Verbindungsstellen 74 aufgrund der zwischen dem Oberteil 61 und dem Untereil 66 zwischengelagerten Membran 64 Dichtbereiche 70 bzw. 72 erzeugen.

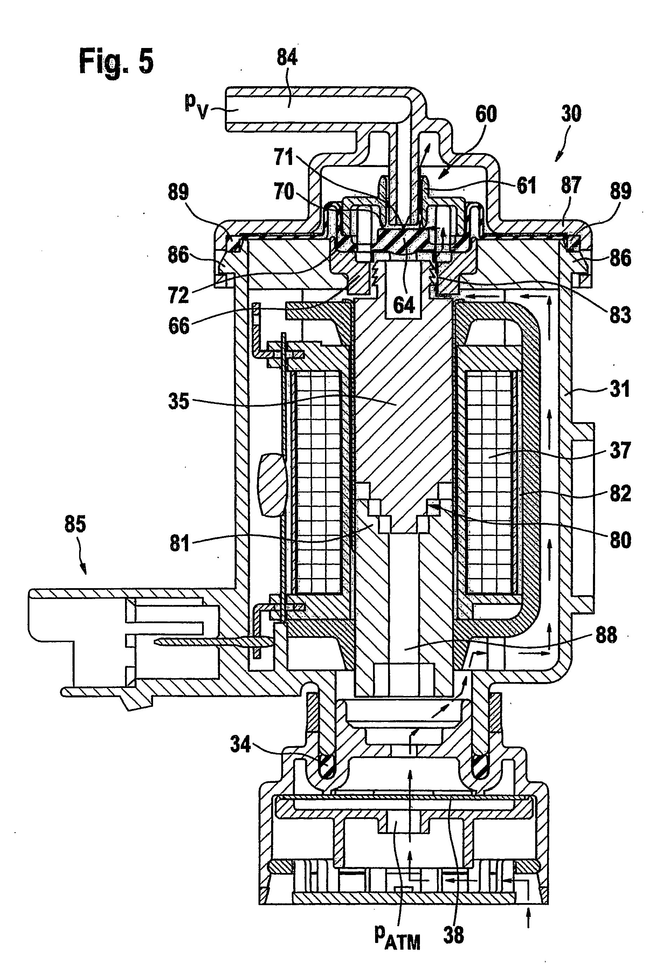

Fig. 5 zeigt den Einsatz der erfindungsgemäß vorgeschlagenen Regler-Baugruppe gemäß der Fig. 3.1, 3.2, 3.3 sowie 4 an einem elektropneumatischen Wandler.

Der in Fig. 5 dargestellte elektropneumatische Wandler 30 umfasst das Gehäuse 31, in welchem die den Magnetkern 65 umschließende Magnetspule 37 angeordnet ist. An der Unterseite des Gehäuses 31 befindet sich der Filtereinsatz 38 oberhalb einer mit dem Atmosphärendruck p_{ATM} befindlichen Öffnung.

Im oberen Bereich des elektropneumatischen Wandlers ist die aus dem Oberteil 61, der einstückig, flächig ausgebildenden Membran 64 und das Unterteil 66 umfassende Regler-Baugruppe 60 angeordnet. Das Oberteil 61 der Regler-Baugruppe 60 umschließt einen Stutzen 84, welcher mit dem Versorgungsunterdruck p_{V} beaufschlagt ist. Unterhalb des mit einem balligen Bereich ausgebildeten einstückigen Membranteiles 64 befindet sich der Magnetkern 35, der seinerseits von einer Ankerführung und der Magnetspule 37 umschlossen ist. Der Magnetkern 35 umfasst eine Sägezahnprofilierung 83, mit welcher dieser das Unterteil 66 der Regler-Baugruppe 60 durchsetzt. Das einstückig, flächig ausgebildete Membranteil 64 weist an seinem Außenumfang Einspannstellen 89 auf, über welche das Membranteil 64 nach der Montage eines Deckelelementes 87 des elektropneumatischen Wandlers 30 im Gehäuse 31 eingespannt wird.

Der Magnetkern 35 umfasst eine Profilierung 80, welche mit einer Magnetankerprofilierung 81 des Magnetankers des elektropneumatischen Wandlers 30 zusammenwirkt. Der Magnetanker ist von einer Durchgangsbohrung 88 durchzogen. Das Gehäuse 31 des elektropneumatischen Wandlers 30 weist Schnappverschlüsse 86 auf, an welchen das Deckelelement 87 verrastbar ist. Im unteren Bereich des Gehäuses 31 des elektropneumatischen Wandlers 30 befindet sich ein Steckeranschluss 85 zur Kontaktierung der Magnetspule 37, beispielsweise über einen Rammkontakt. Die die elektrische Schnittstelle markierende Position 85 kann beispielsweise auch über einen FCI-Stecker Kontakt belegt werden.

Aus der Darstellung gemäß Fig. 5 geht hervor, dass durch den Einsatz eine erfindungsgemäß vorgeschlagene Regler-Baugruppe 60, ein Oberteil 61, ein einstückiges, flächiges Membranteil 64 sowie ein Unterteil 66 enthaltend, eine erhebliche Vereinfachung des Aufbaus des Regel-Bereiches des elektropneumatischen Druckwandlers 30 erreicht werden kann. Die Komponenten 61, 64 und 66 der Regler-Baugruppe 60 können als einfach herzustellende Kunststoffspritzgussbauteile gefertigt werden und vor Montage des Deckelelementes 87 des elektropneumatischen Wandlers 30 in diesen eingelegt werden. Eine Anordnung von Federelementen 47, 48, 49 zum Vorspannen der Membranteile 45, 51 sowie zum Vorspannen des Ventilhutes 43 sowie separate Dichtflächen 40, 46 gemäß der Darstellung in Fig. 2.1 eines Regel-Bereiches eines aus dem Stand der Technik bekannten elektropneumatischen Wandlers, können durch Einsatz der erfindungsgemäß vorgeschlagenen Regler-Baugruppe 60 umgangen werden. Damit lässt sich eine erhebliche Vereinfachung der Montage des elektropneumatischen Druckwandlers erreichen. Ferner können die Federelemente 47, 48 sowie 49 nunmehr entfallen. Insbesondere entfällt das Erfordernis, das erste Membranteil 45 gemäß Fig. 2.1 über das Federelement 47 an den Dichtgummi 47, der im Ventilhut 43 aufgenommen ist, anzustellen. Eine Abdichtung zwischen in den Ventilhut 43 eingelassenen Dichtgummi und der Durchgangsbohrung 39 lässt sich durch die erfindungsgemäß vorgeschlagene Regler-Baugruppe 60 durch den Dichtfläche 70 erzielen, der sich beim stoffschlüssigen Fügen des Oberteiles 61 mit dem Unterteil 66 unter Zwischenlagerung der einstückigen Membran 64 auf der Planfläche 71 des einstückigen Membranteiles von selbst einstellt.

Wie dem Verlauf des in Fig. 5 eingetragenen Pfeiles, welcher den Weg der Luft durch den elektropneumatischen Druckwandler 30 zeigt, entnommen werden kann, strömt die Luft durch die der Atmösphärenseite zugewandte Öffnung über den Filtereinsatz 38 in einen Spalt 82 ein, welcher zwischen der Außenseite der Magnetspule 37 und der Innenseite des Gehäuses 31 ausgebildet ist. Die Luft strömt entlang des Sägezahnprofiles 83 am Magnetkern 35 vorbei und entlang der Öffnungen 69 in die Kammer oberhalb der Reglerbaugruppe 60.

### Bezugszeichenliste

- 1: Verbrennungskraftmaschine
- 2: Zylinderkopfbereich
- 3: Hochdruckaggregat
- 7: Kraftstoffinjektor
- 8: Brennraum
- 9: Kolben
- 10: Zylinder
- 15: Abgasrückführventil
- 16: 1. Steller
- 17: 1. elektropneumatischer Wandler
- 19: 1. Ladedrucksteller
- 20: 2. elektropneumatischer Wandler
- 21: 2. Ladedrucksteller
- 22: Ladeluftkühler
- 23: Bypass-Leitung
- 24: Bypass-Klappensteller
- 25: 3. elektropneumatischer Wandler
- 26: Regelklappensteller
- 27: 4. elektropneumatischer Wandler

- 30: Elektropneumatischer Wandler
- 31: Gehäuse
- 32: Filterelement
- 33: Deckelteil

- P_{ATM}: Umgebungsdruck

- 34: Dichtung
- 35: Magnetkern
- 36: Magnettopf
- 37: Magnetspule
- 38: Filtereinsatz

- p_{Var}: Mischdruck
- P_{V}: Unterdruckversorgung

- 72: Dichtbereich
- 73: Linienkontakt
- 74: Stoffschlüssige Fügestelle

- 80: Magnetkern-Profilierung
- 81: Magnetanker-Profilierung
- 82: Spalt
- 83: Sägezahnprofil
- 84: Stutzen
- 85: Steck-Anschluss
- 86: Schnappverschluss-Deckelelement
- 87: Deckelelement
- 88: Durchgangsbohrung
- 89: Einspannstelle
- 90: umlaufende Ausnehmung

- 39: Durchgangsbohrung
- 40: Gummiplatte
- 41: Ankerplatte
- 42: Joch
- 43: Ventilhut
- 44: Drosselstelle
- 45: 1. Membranteil
- 46: Dichtgummi
- 47: 1. Federelement
- 48: 2. Federelement
- 49: 3. Federelement
- 50: Koppelstelle
- 51: 2. Membranteil

- 60: Regler-Baugruppe
- 61: Oberteil
- 62: Öffnungen
- 63: Berandung
- 64: einstückiges Membranteil
- 65: Berandung
- 66: Unterteil
- 67: Stegfläche
- 68: Zwischenraum
- 69: Durchgangsöffnungen im Membranteil (64)
- 70: Dichtfläche (im Betrieb)
- 71: Planfläche Membranteil (64)

## Patentansprüche

1. Elektropneumatischer Druckwandler (30) mit einem Magnetventil, welches eine Magnetspule (37) und einen Magnetkern (35) aufweist, die in einem Gehäuse (31) aufgenommen sind, sowie eine Regler-Baugruppe (60), mit welcher ein variabler Unterdruck p_{Var} von Verbrauchern (16, 19, 21, 24) regelbar ist, **dadurch gekennzeichnet, dass** die Regler-Baugruppe (60) unter Ausbildung von Dichtstellen (70, 72) stoffschlüssig miteinander gefügte Bauelemente (61, 64, 66) aufweist, wobei die miteinander gefügten Bauteile als Oberteil (61), als einstückiges Membranteil (64) sowie als ein Unterteil (66) mit Stegflächen (67) ausgebildet sind, wobei das einstückige Membranteil (64) eine Planfläche (71) aufweist, die mit einer Berandung (63) einer Öffnung (62) des Oberteiles (61) eine Dichtfläche (70) ausbildet.

2. Elektropneumatischer Wandler gemäß Anspruch 1, **dadurch gekennzeichnet, dass** die Bauelemente (61, 64, 66) der Regler-Baugruppe (60) jeweils getrennt voneinander herstellbare Spritzgussbauteile sind.

3. Elektropneumatischer Wandler gemäß Anspruch 1, **dadurch gekennzeichnet, dass** die Stegflächen (67) Öffnungen (69) im einstückigen Membranteil (64) durchgreifen und am Oberteil (61) arretierbar sind.

4. Elektropneumatischer Wandler gemäß Anspruch 1, **dadurch gekennzeichnet, dass** das Unterteil (66) das einstückige Membranteil (64) unter Ausbildung eines Dichtbereiches (72) linienförmig (73) kontaktiert.

5. Elektropneumatischer Wandler gemäß Anspruch 1, **dadurch gekennzeichnet, dass** das einstückige Membranteil (64) eine dessen Bodenflächen begrenzende Berandung (65) aufweist, in welche das Oberteil (61) eingelassen ist.

6. Elektropneumatischer Wandler gemäß Anspruch 1, **dadurch gekennzeichnet, dass** an der Unterseite des Oberteiles (61) eine umlaufende Ausnehmung (90) ausgebildet ist, in welcher die die Durchgangsöffnungen (69) des einstückigen Membranteiles (64) durchsetzenden Stegflächen (67) des Unterteiles (66) eingreifen.

7. Elektropneumatischer Wandler gemäß Anspruch 1, **dadurch gekennzeichnet, dass** die Bauelemente (61, 66) an Fügestellen (74) derart stoffschlüssig verbunden sind, dass das einstückige Membranteil (64) zwischen diesen angeordnet ist.

8. Elektropneumatischer Wandler gemäß Anspruch 6, **dadurch gekennzeichnet, dass** die Stegflächen (67) des Unterteiles (66) mit der umlaufenden Ausnehmung (90) an einer Unterseite des Oberteiles (61) einen Schnappverschluss bilden.

## Claims

1. Electropneumatic pressure transducer (30) comprising a solenoid valve which has a magnet coil (37) and a magnet core (35) which are held in a housing (31), and comprising a regulating assembly (60) which can be used to regulate a variable negative pressure Pᵥₐᵣ of consumers (16, 19, 21, 24), **characterized in that** the regulating assembly (60) has components (61, 64, 66) which are integrally joined to one another with the formation of sealing locations (70, 72), wherein the components joined to one another are in the form of an upper part (61), a unipartite diaphragm part (64) and a lower part (66) with web surfaces (67), wherein the unipartite diaphragm part (64) has a planar surface (71) which forms a sealing surface (70) with a boundary (63) of an opening (62) in the upper part (61).

2. Electropneumatic transducer according to Claim 1, **characterized in that** the components (61, 64, 66) of the regulating assembly (60) are injection-moulded components which can in each case be produced separately from one another.

3. Electropneumatic transducer according to Claim 1, **characterized in that** the web surfaces (67) pass through openings (69) in the unipartite diaphragm part (64) and can be locked on the upper part (61).

4. Electropneumatic transducer according to Claim 1, **characterized in that** the lower part (66) makes linear contact (73) with the unipartite diaphragm part (64) with the formation of a sealing region (72).

5. Electropneumatic transducer according to Claim 1, **characterized in that** the unipartite diaphragm part (64) has a boundary (65) which delimits the bottom surfaces thereof and into which the upper part (61) is incorporated.

6. Electropneumatic transducer according to Claim 1, **characterized in that** formed in the lower side of the upper part (61) is a peripheral cutout (90) in which the web surfaces (67), which pass through the through-openings (69) of the unipartite diaphragm part (64), of the lower part (66) engage.

7. Electropneumatic transducer according to Claim 1, **characterized in that** the components (61, 66) are integrally connected at joints (74) such that the unipartite diaphragm part (64) is arranged between them.

8. Electropneumatic transducer according to Claim 6, **characterized in that** the web surfaces (67) of the lower part (66) form a snap lock with the peripheral cutout (90) on a lower side of the upper part (61).

## Revendications

1. Convertisseur électropneumatique de pression (30) comportant une électrovanne ayant une bobine électromagnétique (37) et un induit magnétique (35) logés dans un boîtier (31) ainsi qu'un ensemble de régulation (40) permettant de réguler une dépression variable (pᵥₐᵣ) d'utilisateurs (16, 19, 21, 24),
**caractérisé en ce que**
l'ensemble régulateur (60) est formé de composants (61, 64, 66) assemblés par une liaison de matière en formant des points d'étanchéité (70, 72),
les composants assemblés étant une pièce supérieure (61), une pièce de membrane (64) en une seule partie ainsi qu'une pièce inférieure (66) munie de surfaces de doigts (67),
la pièce de membrane (64) en une seule partie ayant une surface plane (71) formant une surface d'étanchéité (70) avec le bord (63) d'une ouverture (62) de la pièce supérieure (61).

2. Convertisseur électropneumatique selon la revendication 1,
**caractérisé en ce que**
les composants (61, 64, 66) de l'ensemble (60) sont des pièces injectées, fabriquées séparément les unes des autres.

3. Convertisseur électropneumatique selon la revendication 1,
**caractérisé en ce que**
les surfaces de doigts (67) traversent des ouvertures (69) de la pièce de membrane (64) en une seule partie et sont bloquées contre la pièce supérieure (61).

4. Convertisseur électropneumatique selon la revendication 1,
**caractérisé en ce que**
la pièce inférieure (66) touche la pièce de membrane en une seule partie (64) en formant une zone d'étanchéité (72) de forme linéaire (73).

5. Convertisseur électropneumatique selon la revendication 1,
**caractérisé en ce que**
la pièce de membrane en une seule partie (64) comporte un bord (65) délimitant ses surfaces de fond et dans lequel pénètre la pièce supérieure (61).

6. Convertisseur électropneumatique selon la revendication 1,
**caractérisé par**
une cavité périphérique (90) réalisée dans la face inférieure de la pièce supérieure (61) et dans laquelle pénètrent les surfaces d'entretoise (61) de la pièce inférieure (66) traversant les orifices de passage (69) de la pièce de membrane (64) en une seule partie.

7. Convertisseur électropneumatique selon la revendication 1,
**caractérisé en ce que**
les composants (61, 66) sont reliés aux points d'assemblage (74) par une liaison par la matière de façon à recevoir entre eux, la pièce de membrane (64) en une seule partie.

8. Convertisseur électropneumatique selon la revendication 6,
**caractérisé en ce que**
les surfaces de doigts (67) de la pièce inférieure (66) forment avec la cavité périphérique (90) une liaison enclipsée au niveau de la face inférieure de la pièce supérieure (61).
